# EUROPÄISCHE PATENTSCHRIFT

(11) **EP 1 251 613 B1**
(45) Veröffentlichungstag und Bekanntmachung des Hinweises auf die Patenterteilung: **07.02.2007**
(21) Anmeldenummer: 01250139.1
(22) Anmeldetag: 20.04.2001
(51) Int. Cl.: H02B 1/21

(54) **Anschlussvorrichtung für ein Schaltfeld mit Geräteeinschüben**
Connection device for electric board with withdrawable units
Dispositif de connnection pour tableau électrique comportant des appareils extractibles

(43) Veröffentlichungstag der Anmeldung: 23.10.2002
(73) Patentinhaber: SIEMENS AKTIENGESELLSCHAFT, 80333 München (DE)
(72) Erfinder: Kulacoglu, Nesat, 81430 Kartal/Istanbul (TR)

(56) Entgegenhaltungen:
- US-A- 3 168 683

## Beschreibung

Die Erfindung betrifft eine Anschlussvorrichtung zur Herstellung elektrischer Verbindungen eines Geräteeinschubes einer Niederspannungs-Schaltfeldes mit in einem Kabelanschlussraum befindlichen ortsfesten Klemmstellen für weiterführende Kabel, wobei der Geräteeinschub auf einem im Gerüst der Schaltanlage angeordneten Fachboden geführt ist und die Anschlussvorrichtung ein Gehäuse aus Isolierstoff und in dem Gehäuse angeordnete, mit dem Geräteeinschub zusammenwirkende Trennkontaktstücke sowie Verbindungsleiter aufweist.

Eine Anschlussvorrichtung dieser Art ist z. B. durch die EP 0 695 470 B1 bekannt geworden. Dabei enthält die Anschlussvorrichtung sowohl Leiterbahnen zur Verbindung eines Geräteeinschubes mit Feldschienen als auch Leiterbahnen zur Verbindung der Ausgänge der Geräteeinschübe mit ortsfesten Klemmstellen, an denen die zu den Verbrauchern führenden Kabel angeschlossen werden. Eine weitere Anschlussvorrichtung dieser Art ist durch die US-A-3 168 683 bekannt geworden. Die Erfindung betrachtet nur die Verbindung der Ausgänge von Geräteeinschüben mit den ortsfesten Klemmstellen und strebt hierfür eine technisch und wirtschaftlich vorteilhafte Lösung an, die sich insbesondere für größere Bemessungsströme eignet.

Gemäß der Erfindung wird diese Aufgabe dadurch gelöst, dass das Gehäuse der Anschlussvorrichtung flach ausgebildet und zur unterhalb des Fachbodens montiert ist und dass die Verbindungsleiter mit ihren aus dem Gehäuse herausragenden Enden im Kabelanschlussraum gelegene Klemmstellen und mit dem Geräteeinschub zusammenwirkende Trennkontaktstücke bilden. Die Vorteile und Eigenschaften dieser Anschlussvorrichtung beruhen darauf, dass das Gehäuse aus preiswerten Kunststoffteilen und die Verbindungsleiter einschließlich der Trennkontaktstücke und der Klemmstellen aus handelsüblichem Profilmaterial oder Blech hergestellt werden können.

Das Gehäuse kann aus zwei einander übergreifenden Gehäuseteilen bestehen, von denen ein Gehäuseunterteil kanalartige Kammern für die Verbindungsleiter und ein Gehäuseoberteil Öffnungen zum Durchtritt abgewinkelter Enden der Verbindungsleiter aufweist. Ein ähnliches Gehäuse, jedoch nicht für flache Profilleiter, weist die Verteilungsbaugruppe nach der erwähnten EP 0 695 470 B1 auf.

Die in einer Schaltanlage benutzten Geräteeinschübe können sich nach der Höhe der Leistung und damit des Bemessungsstromes und auch hinsichtlich der Schaltaufgabe (normale Schaltung oder Stern-Dreieck-Schaltung) unterscheiden. Beiden Besonderheiten wird die Anschlussvorrichtung nach der Erfindung auf überraschend einfache Weise dadurch gerecht, dass im Gehäuseunterteil mit den Öffnungen des Gehäuseoberteiles fluchtende Öffnungen angeordnet sind, derart, dass abgewinkelte Enden von Verbindungsleitern eines unteren Gehäuses durch ein darüber befindliches Gehäuse hindurchtreten können. Zunächst sei der Fall betrachtet, dass die Anschlussvorrichtung für einen höheren Bemessungsstrom geeignet sein soll. Hierzu können nach einer Ausgestaltung der Erfindung die Durchtrittsöffnungen des Gehäuses mit einer Breite bemessen sein, die wenigstens der doppelten Dicke der abgewinkelten Enden entspricht, derart, dass zur Bildung einer Anschlussvorrichtung mit dem doppelten Leiterquerschnitt gleiche abgewinkelte Enden von Verbindungsleitern von zwei übereinander angeordneten Gehäusen gemeinsam durch die Durchtrittsöffnungen des oberen der beiden Gehäuse austreten können. Es können daher gleiche Gehäuseteile kombiniert werden, die mit entsprechend angepassten Verbindungsleitern bestückt werden.

Die weitere Aufgabe, dass die Anschlussvorrichtung auch für eine Stern-Dreieck-Schaltung geeignet ist, kann dadurch gelöst werden, dass das Gehäuse weitere Durchtrittsöffnungen in solcher Anordnung besitzt, dass die abgewinkelten Enden der Verbindungsleiter von zwei übereinander angeordneten Gehäusen in der Schieberichtung des Geräteeinschubes gesehen mit einem Zwischenraum hintereinander liegen.

Da offensichtlich ein Gehäuse, das sowohl verbreiterte Durchtrittsöffnungen als auch zusätzliche Durchtrittsöffnungen besitzt, für alle vorkommenden Aufgaben geeignet ist, empfiehlt es sich, diese Gehäuseform für alle vorgesehenen Anschlussvorrichtungen zu benutzen.

Obwohl ein Schaltfeld in der Weise errichtet werden kann, dass zunächst die Fachböden im Gerüst der Schaltfeldes montiert werden, empfiehlt es sich, einen Fachboden und wenigstens eine Anschlussvorrichtung mittels einer das Gehäuse in Schieberichtung des Geräteeinschubes abstützenden Traverse zu einer montagefertigen Einheit derart zu verbinden, dass ein rückwärtiger, die Durchtrittsöffnungen für die abgewinkelten Enden der Verbindungsleiter aufweisender Gehäuseteil und ein seitlicher, die mit den Klemmstellen versehenen Enden aufweisender Gehäuseteil hinten und seitlich über den Fachboden übersteht.

Die Erfindung wird im folgenden anhand der in den Figuren dargestellten Ausführungsbeispiele näher erläutert.

Die Figur 1 zeigt ein Schaltfeld für Geräteeinschübe mit Fachböden und Anschlussvorrichtungen.

Die Figur zeigt eine montagefertige Einheit aus Fachboden und Anschlussvorrichtung.

Die Figur 3 zeigt eine Anschlussvorrichtung in vierpoliger Ausführung mit einem Verbindungsleiter je Pol.

Die Figur 4 zeigt eine Anschlussvorrichtung für einen erhöhten Bemessungsstrom mit zwei Gehäusen und je zwei Verbindungsleitern je Pol.

Die Figur 5 zeigt nochmals die Abschlussvorrichtung nach der Figur 4, jedoch mit abgenommenem Deckel des oberen Gehäuses, um die Gestaltung und Anordnung von Verbindungsleitern sichtbar zu machen.

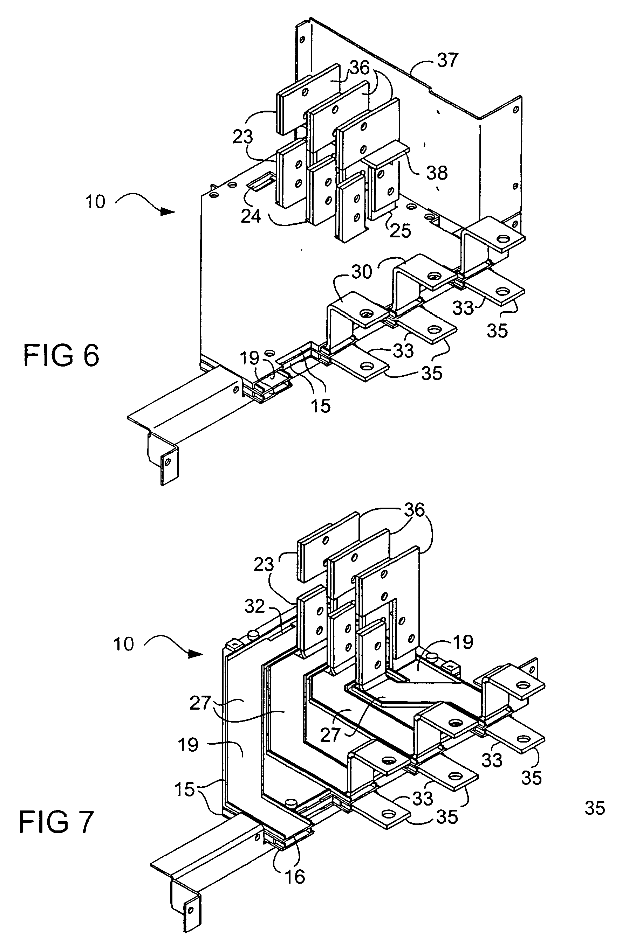

Als weiteres Ausführungsbeispiel veranschaulicht die Figur 6 eine Anschlussvorrichtung für Stern-Dreieck-Schaltung, die gleichfalls zwei übereinander montierte Gehäuse aufweist.

In der Figur 7 ist die Anschlussvorrichtung gemäß der Figur 6 mit abgenommenem Deckel des oberen Gehäuses gezeigt, um gleichfalls Form und Anordnung der Verbindungsleiter sichtbar zu machen.

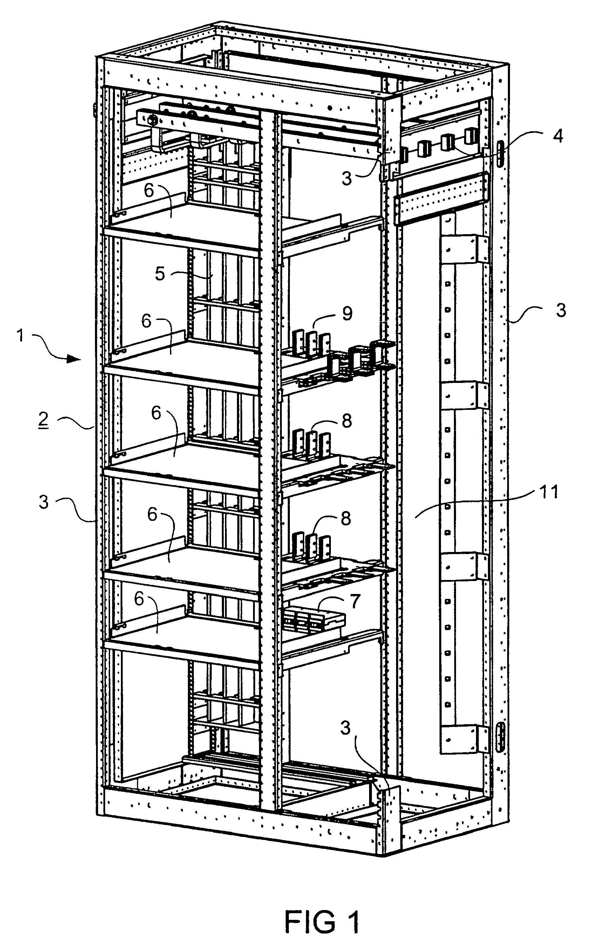

Das in der Figur 1 gezeigte Schaltfeld 1 einer Niederspannungs-Schaltanlage weist in bekannter Weise ein Gerüst 2 auf, das vertikale Gerüstelemente 3 aufweist und eine oben horizontal angeordnete Hauptsammelschiene 4 sowie vertikale Feldschienen 5 enthält. An den vertikalen Gerüstelementen 3 sind Fachböden 6 als Träger und Führungsmittel für nicht gezeigte, an sich bekannte oder geeignete Geräteeinschübe befestigt, die rückseitige Trennkontakte aufweisen.

Der Abstand der Fachböden 6 ist unterschiedlich, um den Raum zwischen zwei Fachböden 6 der Höhe der Geräteeinschübe anzupassen. Ein relativ niedriges Einschubfach ist zwischen den beiden untersten Fachböden 6 in der Figur 1 gebildet, da dies zur Aufnahme eines Geräteeinschubes für einen entsprechend niedrigen Bemessungsstrom ausreicht. Eine hierzu besonders geeignete Anschlussvorrichtung 7 ist Gegenstand einer weiteren Patentanmeldung mit dem Titel "Anschlussvorrichtung für einen Geräteeinschub eines Niederspannungs-Schaltfeldes" und wird im Folgenden nicht näher erläutert. Die darüber befindlichen Einschubfächer sind für Geräteeinschübe mit größerer Leistung bestimmt und weisen dementsprechend Anschlussvorrichtungen für einen höheren Bemessungsstrom auf. Diese Anschlussvorrichtungen 8, 9 und 10 werden nachstehend näher beschrieben, wobei die Anschlussvorrichtung 10 gesondert in den Figuren 6 und 7 gezeigt ist, auf die weiter unten eingegangen wird.

Das in der Figur 1 rechts vorn gelegene vertikale Gerüstelement 3 ist abgebrochen gezeigt, um freie Einsicht in einen Kabelanschlussraum 11 zu gewähren, der sich seitlich von den Fachböden 6 über die Höhe des Gerüstes 2 erstreckt. In den Kabelanschlussraum 11 ragen Klemmstellen der Anschlussvorrichtungen 7, 8, 9 und ggf. 10 hinein, um zu den Verbrauchern führende Kabel anschließen zu können.

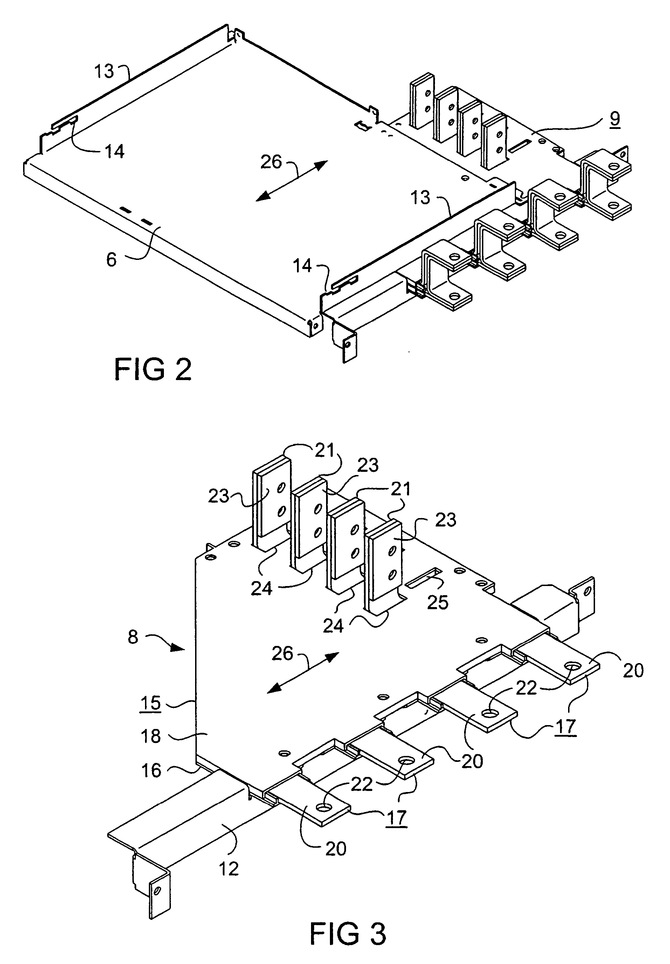

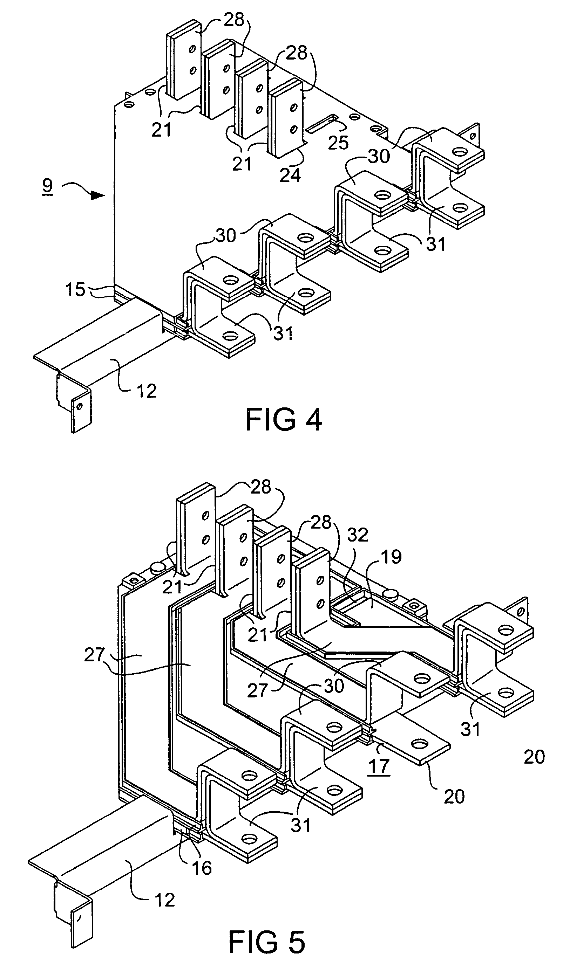

In der Figur 2 ist zunächst eine montagefertige Baueinheit gezeigt, die einen Fachboden 6, eine Anschlussvorrichtung 9 und eine beide Elemente verbindende Traverse 12 umfasst. Der Fachboden weist seitliche Abkantungen 13 mit Positionskulissen 14 zur Verriegelung eines nicht gezeigten Geräteeinschubes in der Betriebsstellung sowie in einer Trenn- und /oder Teststellung auf. Auf Einzelheiten der Anschlussvorrichtung 9 wird noch anhand der Figuren 4 und 5 eingegangen.

Zunächst wird auf die Figur 3 Bezug genommen, die eine Anschlussvorrichtung 8 zusammen mit einer Traverse 12 zeigt. Die Anschlussvorrichtung 8 stellt die Grund- oder Standardausführung einer Anschlussvorrichtung nach der Erfindung dar. Sie weist hierzu ein Gehäuse 15 auf, das aus einem Gehäuseunterteil 16 mit Stegen oder Rippen zur Bildung von Kanälen 31 für Verbindungsleiter 17 und einem diese Kanäle 31 überdeckenden Gehäuseoberteil 18 besteht. In bekannter Weise können die aus einem geeigneten Kunststoff bestehenden Gehäuseteile 16 und 18 durch angeformte Schnappnasen oder -Zungen oder durch übliche Verbindungselemente miteinander verbunden sein. Die Verbindungsleiter 17 sind durch das Zusammenfügen der Gehäuseteile 16, 18 gleichfalls in dem Gehäuse 15 befestigt.

Die Verbindungsleiter 17 sind vorzugsweise aus einem handelsüblichen Flachmaterial (Kupferblech oder Kupfer-Rechteckprofil) hergestellt und sind so bemessen, dass sie mit ihren Enden 20 und 21 aus dem Gehäuse 15 herausragen. Die Enden 20 ragen in den Kabelanschlussraum 11 (Figur 1) und sind zur Bildung einer Klemmstelle für ein weiterführendes Kabel (nicht gezeigt) mit einer Durchgangsöffnung 22 versehen. Die Enden 21 sind zur Bildung von Trennkontaktstücken gegenüber der Ebene des Gehäuses 15 abgewinkelt und ragen entsprechend der Figur 2 an der hinteren Kante über die Ebene des Fachbodens 6. Die Enden 21 können zwar selbst als Trennkontaktstücke benutzt werden, sind aber in dem gezeigten Beispiel mit Auflagestücken 23 versehen, welche die gleiche Dicke wie die Enden 21 aufweisen. Auf den Zweck dieser Maßnahme wird noch eingegangen.

Im Gehäuseoberteil 18 des Gehäuses 15 in der Figur 3 ist für jedes der vier abgewinkelten Enden 21 eine Öffnung 25 vorgesehen. Diese Öffnungen 25 besitzen eine Breite entsprechend der doppelten Dicke des Materials der Verbindungsleiter 17. Zusätzliche Öffnungen 25 sind im Gehäuseoberteil 18 in der Schieberichtung des Geräteeinschübe (angedeutet durch einen Doppelpfeil 26 in den Figuren 2 und 3) hinter den Öffnungen 24 angeordnet. Diese Öffnungen 25 werden bei dem Beispiel gemäß der Figur 3 (Anschlussvorrichtung 8) nicht benötigt, sind jedoch von Bedeutung für die weiteren Ausführungsformen der Erfindung (Anschlussvorrichtung 9, vgl. Figuren 4 und 5 sowie Anschlussvorrichtung 10, Figuren 6 und 7).

Die in den Figuren 4 und 5 veranschaulichte Anschlussvorrichtung 9 ist für Geräteeinschübe und Verbraucher mit höherer Leistung vorgesehen und ist gegenüber der Anschlussvorrichtung 8 mit dem doppelten Leiterquerschnitt ausgestattet. Dies wird dadurch erreicht, dass zwei gleiche Gehäuse 15 übereinander angeordnet und beide mit Verbindungsleitern versehen sind. Dabei entsprechen die Verbindungsleiter im unteren Gehäuse 15 den Verbindungsleitern 17 in der Figur 3, während im oberen Gehäuse 15 weitgehend ähnliche und nur in Einzelheiten abweichende Verbindungsleiter 27 angeordnet sind. Im wesentlichen handelt es sich dabei um die abgewinkelten Enden 28 und die in den Kabelanschlussraum 11 ragenden Enden 30 der Verbindungsleiter 27. Um die betreffenden Einzelheiten zu veranschaulichen, ist in der Figur 5 das Gehäuseoberteil des oberen Gehäuses 15 fortgelassen. Die in kanalartigen Kammern 19 des Gehäuses 15 aufgenommenen Verbindungsleiter sind derart geformt, dass die abgewinkelten Enden 28 parallel zu den Enden 21 stehen und hierdurch ein Trennkontaktstück der gleichen Dicke wie in der Figur 3 gebildet wird. Die in den Kabelanschlussraum 11 ragenden Enden 30 der oberen Verbindungsleiter 27 sind derart zweifach abgewinkelt, dass sie parallel zur Ebene des Gehäuses 15 im Abstand zu den Enden 20 der Verbindungsleiter 17 stehen. Beide Enden 20 und 30 sind durch eingelegte U-förmige Kuppelstücke 31 verbunden. Bei einem der Pole ist das Kuppelstück in der Figur 5 fortgelassen, um die Gestalt des Verbindungsleiters 27 mit dem Ende 30 besser sichtbar zu machen.

Durch die Spreizung der Enden 20 und 30 werden je Pol zwei Klemmstellen gebildet, die in mehrfacher Weise zum Anschluss von Kabeln benutzt werden können. Sollte im Einzelfall nur eine dieser Klemmstellen benutzt werden, so empfiehlt es sich jedoch, an der verbleibenden Klemmstelle eine Klemmschraube einzusetzen, um die Stromverteilung auf beide Verbindungsleiter 17 und 27 mittels des Kuppelstückes 31 sicherzustellen.

In der Figur 5 ist ferner im hinteren Bereich mit den als Trennkontaktstücke dienenden Enden 21 und 28 eine im Gehäuseunterteil 16 angeordnete Öffnung 32 erkennbar. Die Öffnung 32 fluchtet mit einer entsprechenden Öffnung 25 im Gehäuseoberteil 18. Gleiche Öffnungen 32 sind jeder der Öffnungen 24 und 25 zugeordnet (vgl. auch Figur 7). Durch die Öffnungen 32 treten die Verbindungsleiter 17 bei der Anschlussvorrichtung 9 (Figuren 4 und 5) aus dem unteren Gehäuse 15 nach oben hindurch.

Die Anschlussvorrichtung 10 gemäß den Figuren 6 und 7 ermöglicht den Betrieb eine Motorantriebes in Stern-Dreieck-Schaltung und weist gleichfalls zwei übereinander angeordnete Gehäuse 15 auf. Im unteren Gehäuse 15 befinden sich Verbindungsleiter 33, die sich von den Verbindungsleitern 17 (Figur 3) dadurch unterschieden, dass ihre abgewinkelten Enden 34 durch die Öffnungen 32 (Figur 5) und die hinteren Öffnungen 25 im Gehäuseoberteil 18 herausgeführt sind. Die im Kabelanschlussraum 11 (Figur 1) gelegenen Enden 35 entsprechen den Enden 20 der Verbindungsleiter 17 (Figur 3). Die Verbindungsleiter im oberen Gehäuse 15 entsprechen den Verbindungsleitern 27 in der Figur 5 und sind entsprechend bezeichnet.

Für die vorgesehene Schaltung der Anschlussvorrichtung 10 sind gesonderte Trennkontaktstücke an beiden Sätzen von Verbindungsleitern 33 und 27 erforderlich. Dies wird dadurch erreicht, dass die Enden 34 der Verbindungsleiter 33 mit je einem Winkelstück 36 versehen werden. Auf diese Weise werden oberhalb der Enden 28 gelegene, d. h. vertikal fluchtende Trennkontaktstücke gebildet. Auflagestücke 23 an den Enden 28 und den Winkelstücken 36 sorgen für das gewünschte Dickenmaß entsprechend den Trennkontaktstücken an den Geräteeinschüben.

In der Figur 6 sind als zweckmäßige Ergänzung der Anschlussvorrichtung 10 eine rückseitige isolierende Trennplatte 37 sowie ein Stützkamm 38 gezeigt, die fluchtende Ausrichtung der Enden 28 und 34 bzw. der Winkelstücke 36 sorgt.

Um die Bezugnahme auf die Verbindungsleiter zu erleichtern, wurden im Rahmen der vorstehenden Beschreibung für die in einem Gehäuse 15 der Anschlussvorrichtungen 8, 9 oder 10 aufgenommenen Verbindungsleiter jeweils gleiche Bezugszeichen verwendet, obwohl ihre Gestalt , als ganzes Teil betrachtet, unterschiedlich ist. Wesentlich für die Verbindungsleiter ist eine aus den Figuren ersichtliche Gestaltung, die eine Anordnung von Klemmstellen im Kabelanschlussraum 11 hintereinander (von der Front des Schaltfeldes her gesehen) und eine Anordnung von Trennkontaktstücken am hinteren Ende eines Fachbodens nebeneinander ergibt. Die zwischen den Klemmstellen und den Trennkontaktstücken befindlichen Abschnitte der Verbindungsleiter sind daher unterschiedlich lang und weisen eine unterschiedliche Abkröpfung oder Abwinklung auf, wie insbesondere den Figuren 5 und 7 zu entnehmen ist. Die erwähnten Kanäle 19 sind dieser abgewinkelten oder abgekröpften Form angepasst und stützen daher die Verbindungsleiter ohne zusätzliche Befestigungs- oder Halteelemente gegen die auftretenden Kräfte ab.

### Bezugszeichen

- 1: Schaltfeld
- 2: Gerüst
- 3: Vertikales Gerüstelement
- 4: Hauptsammelschiene
- 5: Feldschiene
- 6: Fachboden
- 7: Anschlussvorrichtung (erster Typ)
- 8: Anschlussvorrichtung (zweiter Typ, erstes Beispiel)
- 9: Anschlussvorrichtung (zweiter Typ, zweites Beispiel)

- 10: Anschlussvorrichtung (zweiter Typ, drittes Beispiel)
- 11: Kabelanschlussraum
- 12: Traverse
- 13: Seitliche Abkantung des Fachbodens 6
- 14: Positionskulisse
- 15: Gehäuse für Verbindungsleiter
- 16: Gehäuseunterteil
- 17: Verbindungsleiter (Figur 3)
- 18: Gehäuseoberteil
- 19: Kammer im Gehäuse 15 für Verbindungsleiter

- 20: Ende des Verbindungsleiter 17 (im Kabelanschlussraum 11)
- 21: Abgewinkeltes Ende des Verbindungsleiter 17
- 22: Öffnung für Klemmschraube
- 23: Auflagestück
- 24: (vordere) Öffnung im Gehäuseoberteil 18
- 25: (hintere) Öffnung im Gehäuseoberteil 18
- 26: Doppelpfeil für Schieberichtung eines Geräteeinschubes
- 27: Verbindungsleiter (Figuren 4, 5, 6, 7)
- 28: Abgewinkeltes Ende des Verbindungsleiters 27 (Trennkontakt)

- 30: Zweifach abgewinkeltes Ende des Verbindungsleiters 27
- 31: Kuppelstück
- 32: Öffnung im Gehäuseunterteil 16
- 33: Verbindungsleiter (Figuren 6, 7)
- 34: Abgewinkeltes Ende des Verbindungsleiters 33
- 35: Ende des Verbindungsleiters 33 (Klemmstelle)
- 36: Winkelstück
- 37: Isolierende Trennwand
- 38: Stützkamm

## Patentansprüche

1. Anschlussvorrichtung (8, 9, 10) zur Herstellung elektrischer Verbindungen eines Geräteeinschubes eines Niederspannungs-Schaltfeldes mit in einem Kabelanschlussraum (11) befindlichen ortsfesten Klemmstellen für weiterführende Kabel, wobei der Geräteeinschub auf einem im Gerüst (2) des Schaltfeldes (1) angeordneten Fachboden (6) geführt ist und die Anschlussvorrichtung (8, 9, 10) ein Gehäuse (15) aus Isolierstoff und mit dem Geräteeinschub zusammenwirkende Trennkontaktstücke sowie Verbindungsleiter (17, 27, 33) aufweist,
**dadurch gekennzeichnet, dass**
das Gehäuse (15) der Anschlussvorrichtung (8, 9, 10) flach ausgebildet und unterhalb des Fachbodens (6) montiert ist und dass die Verbindungsleiter (17, 27, 33) mit ihren aus dem Gehäuse herausragenden Enden (20, 30, 35; 21, 28, 34) im Kabelanschlussraum (11) gelegene Klemmstellen und mit dem Geräteeinschub zusammenwirkende Trennkontaktstücke bilden.

2. Anschlussvorrichtung nach Anspruch 1,
**dadurch gekennzeichnet, dass**
das Gehäuse (15) aus zwei einander übergreifenden Gehäuseteilen besteht, von denen ein Gehäuseunterteil (16) kanalartige Kammern (19) für die Verbindungsleiter (17, 27, 33) und ein Gehäuseoberteil (18) Öffnungen (24, 25) zum Durchtritt abgewinkelter Enden (21, 28, 34) der Verbindungsleiter (17, 27, 33) aufweist.

3. Anschlussvorrichtung nach Anspruch 2,
**dadurch gekennzeichnet, dass**
im Gehäuseunterteil (16) mit den Öffnungen (24, 25) des Gehäuseoberteiles (18) fluchtende Öffnungen (32) angeordnet sind, derart, dass abgewinkelte Enden (21, 34) von Verbindungsleitern (17, 33) eines unteren Gehäuses (15) durch ein darüber befindliches Gehäuse (15) hindurchtreten können.

4. Anschlussvorrichtung nach Anspruch 3,
**dadurch gekennzeichnet, dass**
die Durchtrittsöffnungen (24) des Gehäuses (15) mit einer Breite bemessen sind, die wenigstens der doppelten Dicke der abgewinkelten Enden (21, 28) entspricht, derart, dass zur Bildung einer Anschlussvorrichtung (9) mit doppeltem Leiterquerschnitt gleiche abgewinkelte Enden (21, 28) von Verbindungsleitern (17, 27)von zwei übereinander angeordneten Gehäusen (15) gemeinsam durch die Durchtrittsöffnungen (24) des oberen der beiden Gehäuse (15) austreten können.

5. Anschlussvorrichtung nach einem der vorangehenden Ansprüche,
**dadurch gekennzeichnet, dass**
das Gehäuse (15) weitere Durchtrittsöffnungen (25) in solcher Anordnung besitzt, dass die abgewinkelten Enden (21, 28) der Verbindungsleiter (17, 27) von zwei übereinander angeordneten Gehäusen (15) in der Schieberichtung (26) des Geräteeinschubes gesehen mit einem Zwischenraum hintereinander liegen.

6. Anschlussvorrichtung nach einem der vorangehenden Ansprüche,
**dadurch gekennzeichnet, dass**
ein Fachboden (6) und wenigstens eine Anschlussvorrichtung (8, 9, 10) mittels einer das bzw. die Gehäuse (15) in Schieberichtung (26) des Geräteeinschubes abstützenden Traverse (12) zu einer montagefertigen Einheit derart verbunden sind, dass ein rückwärtiger, die Öffnungen (24, 25) für die abgewinkelten Enden (28, 34) der Verbindungsleiter (17, 33) aufweisender Gehäuseteil und ein seitlicher, dem Kabelanschlussraum (11) zugewandter Gehäuseteil hinten und seitlich über den Fachboden (6) übersteht.

## Claims

1. Connecting device (8, 9, 10) for making electrical connections between a withdrawable equipment tray of a low-voltage switchgear panel and fixed terminal points for ongoing cables located in a cable connection chamber (11), wherein the withdrawable equipment tray is guided on a compartment floor (6) arranged in the frame (2) of the switchgear panel (1) and the connecting device (8, 9, 10) has a housing (15), which is made from insulating material, and isolating contact pieces acting together with the withdrawable equipment tray, as well as connecting conductors (17, 27, 33), **characterized in that** the housing (15) of the connecting device (8, 9, 10) is designed to be flat and is fitted below the compartment floor (6), and **in that**, with their ends (20, 30, 35; 21, 28, 34) which protrude from the housing, the connecting conductors (17, 27, 33) form terminal points in the cable connection chamber (11) and isolating contact pieces acting together with the withdrawable equipment tray.

2. Connecting device according to Claim 1, **characterized in that** the housing (15) consists of two overlapping housing parts, of which a bottom housing part (16) has channel-like chambers (19) for the connecting conductors (17, 27, 33), and a top housing part (18) has openings (24, 25) for bent ends (21, 28, 34) of the connecting conductors (17, 27, 33) to pass through.

3. Connecting device according to Claim 2, **characterized in that** openings (32) are arranged in the bottom housing part (16) in line with the openings (24, 25) of the top housing part (18) in such a way that bent ends (21, 34) of connecting conductors (17, 33) of a lower housing (15) can pass through a housing (15) above it.

4. Connecting device according to Claim 3, **characterized in that** the passage openings (24) of the housing (15) are of a width which corresponds to at least twice the thickness of the bent ends (21, 28), so that identical bent ends (21, 28) of connecting conductors (17, 27) from two housings (15) arranged one above the other can emerge together through the passage openings (24) of the upper of the two housings (15) to form a connecting device (9) with twice the conductor cross section.

5. Connecting device according to one of the preceding claims, **characterized in that** the housing (15) has further passage openings (25) arranged in such a way that the bent ends (21, 28) of the connecting conductors (17, 27) of two housings (15) arranged one above the other lie behind one another with an intermediate space when viewed in the sliding direction (26) of the withdrawable equipment tray.

6. Connecting device according to one of the preceding claims, **characterized in that** a compartment floor (6) and at least one connecting device (8, 9, 10) are connected to form a ready-assembled unit by means of a cross piece (12), which supports the housing or housings (15) in the sliding direction (26) of the withdrawable equipment tray, in such a way that a rear part of the housing, which has the openings (24, 25) for the bent ends (28, 34) of the connecting conductors (17, 33), and a side part of the housing, which faces the cable connection chamber (11), project beyond the compartment floor (6) at the rear and at the side.

## Revendications

1. Dispositif de connexion (8, 9, 10) pour la réalisation de connexions électriques d'un appareil extractible d'un tableau électrique basse tension, ayant des emplacements de serrage fixes situés dans un compartiment de connexion de câbles (11) pour câbles d'acheminement, l'appareil extractible étant guidé sur une tablette (6) disposée dans le bâti (2) du tableau électrique (1), et le dispositif de connexion (8, 9, 10) présentant un boîtier (15) en matériau isolant et des pièces de contact de coupure coopérant avec l'appareil extractible, ainsi que des conducteurs de connexion (17, 27, 33),
**caractérisé en ce que**
le boîtier (15) du dispositif de connexion (8, 9, 10) est de constitution plate et est monté sous la tablette (6), et **en ce que** les conducteurs de connexion (17, 27, 33)forment, par leurs extrémités (20, 30, 35 ; 21, 28, 34) dépassant du boîtier, des emplacements de serrage placés dans le compartiment de connexion de câbles (11) et des pièces de contact de coupure coopérant avec l'appareil extractible.

2. Dispositif de connexion selon la revendication 1,
**caractérisé en ce que**
le boîtier (15) est composé de deux parties de boîtier se recouvrant l'une l'autre, dont une partie inférieure de boîtier (16) présente des chambres de type canal (19) pour les conducteurs de connexion (17, 27, 33), et une partie supérieure de boîtier (18) présente des ouvertures (24, 25) pour le passage d'extrémités coudées (21, 28, 34) des conducteurs de connexion (17, 27, 33).

3. Dispositif de connexion selon la revendication 2,
**caractérisé en ce que**,
dans la partie inférieure de boîtier (16), sont disposées des ouvertures (32) alignées avec les ouvertures (24, 25) de la partie supérieure de boîtier (18) de telle sorte que des extrémités coudées (21, 34) de conducteurs de connexion (17, 33) d'un boîtier inférieur (15) peuvent traverser un boîtier (15) situé au-dessus.

4. Dispositif de connexion selon la revendication 3,
**caractérisé en ce que**
les ouvertures de traversée (24) du boîtier (15) sont dimensionnées en ayant une largeur qui correspond au moins au double de l'épaisseur des extrémités coudées (21, 28) de sorte que, pour la formation d'un dispositif de connexion (9) à section de conducteur double, des extrémités coudées (21, 28) identiques de conducteurs de connexion (17, 27) peuvent sortir ensemble de deux boîtiers (15) disposés l'un sur l'autre dans les ouvertures de traversée (24) du boîtier supérieur (15).

5. Dispositif de connexion selon l'une des revendications précédentes,
**caractérisé en ce que**
le boîtier (15) possède d'autres ouvertures de traversée (25) dans une position telle que les extrémités coudées (21, 28) des conducteurs de connexion (17, 27) de deux boîtiers (15) disposés l'un au-dessus de l'autre sont, vues dans le sens de coulissement (26) de l'appareil extractible, situées l'une derrière l'autre avec un espace intermédiaire.

6. Dispositif de connexion selon l'une des revendications précédentes,
**caractérisé en ce que**
une tablette (6) et au moins un dispositif de connexion (8, 9, 10) sont, au moyen d'une traverse (12) supportant le ou les boîtiers (15) dans le sens de coulissement (26) de l'appareil extractible, raccordés en une unité finie de montage de sorte qu'une partie de boîtier située à l'arrière, présentant les ouvertures (24, 25) pour les extrémités coudées (28, 34) des conducteurs de connexion (17, 33), et une partie de boîtier latérale, tournée vers le compartiment de connexion de câbles (11) font saillie, à l'arrière et latéralement, au-dessus de la tablette (6).
